# EUROPEAN PATENT SPECIFICATION

(11) **EP 3 702 417 B1**
(45) Date of publication and mention of the grant of the patent: **14.12.2022**
(21) Application number: 20157953.9
(22) Date of filing: 18.02.2020
(51) Int. Cl.: C09D 5/08, C09D 5/24, C09D 7/61

(54) **A METHOD FOR REDUCING GALVANIC PITTING IN TRANSPORTATION AND STORAGE TANKS OF MARINE VESSEL**
VERFAHREN ZUR REDUZIERUNG DER LOCHFRASSKORROSION IN TRANSPORT- UND LAGERTANKS EINES SCHIFFES
PROCÉDÉ DE RÉDUCTION DE LA CORROSION PAR PIQÛRES DANS LES RÉSERVOIRS DE TRANSPORT ET DE STOCKAGE DES NAVIRES

(30) Priority: 27.02.2019 LV 190013
(43) Date of publication of application: 02.09.2020
(73) Proprietor: Marineline Baltic, SIA, 1016 Riga (LV)
(72) Inventor: Brunavs, Janis, 1016 Riga (LV); Brunavs, Krisjanis, 1058 Riga (LV); Morozovs, Bruno Valdis, 1046 Riga (LV)
(74) Representative: Kromanis, Artis

(56) References cited:
- CN-A- 109 384 919

## Description

Invention relates to a method for reduction of galvanic pitting in a transportation and storage tanks of marine vehicles.

Safe and durable tank coating is essential for successful commercial operation of a chemical tanker. Various polymeric materials may be used to coat the tanks. Due to smooth surface with low surface energy and partial non-wetting, polymer coatings of cargo and sump tanks are easy to clean, thus keeping to a minimum, for example, losses in effective life of a marine vehicle and man-hours, as well as reducing environmental footprint.

A variety of polymeric materials such as phenols, vinyl esters, phenolic epoxides and epoxy resins are suitable for coating of a chemical tankers [Polymer Technology in the Coating Industry. APC Technical Whitepaper, Donald J. Keehan, 2016] and this proposed tank electrochemical corrosion protection method could be used.

However, the main shortcomings of polymer coatings in operation are point defects and pinholes that originate during application of the above-mentioned coating or are a result of mechanical damages during pump repair and maintenance processes, as well as cleaning or inspection of the tanks. Defects usually develop from point defects that eventually become visible as a result of electrochemical or galvanic corrosion.

Galvanic corrosion results from a galvanic current flow between two electrochemically dissimilar metals that are in electrical contact while immersed in an electrically conducting liquid. Thus, stainless steel electrically coupled to a surface of a carbon steel and through the electrically conductive liquid (electrolyte) will result in galvanic corrosion of the carbon steel. At the same time, the parts made of stainless steel will be protected from corrosion, because the carbon steel acts as a sacrificial anode [Stainless Steel in Waters: Galvanic Corrosion and its Prevention, by Alfred E. Bauer, Consultant to the Nickel Development Institute].

Various techniques for providing to the paint electro-static dissipation properties as per 10(5) to 10(9) Ohm/square as per ASTM D257 or similar standards are known. For example, by incorporation of metal or metal oxide particles into the polymer coating material oxide (such as disclosed in Chinese patent application publication No. CN103031035A), conductive mica (such as disclosed in Chinese patent application publication No. 201710961404.0), conductive fibre (such as Chinese patent document CN105623490A), conductive carbon black (such as disclosed in Chinese patent application document No. 201810128179.7) or polyaniline carbon nanotube core-shell hybrid composite material (such as disclosed in Chinese patent application publication No. CN109384919A) or for example, by adding wall carbon nanotubes are known. For example, in order to obtain a polymer material with low electrical conductivity that dissipates static electricity, it is advised to incorporate up to 0.02% by weight of single-wall carbon nanotubes, for example, up to 0.2% by weight of Tuball Matrices 203 ^{®} (www.ocsial.com).

The ratio of cathodic to anodic areas is a critical aspect of galvanic corrosion, and the surface that is subjected to electrolytic reaction has a major influence on the dissolution rate of a material [Bimetallic Corrosion - Guides to Practice in Corrosion Control 14. Department of Industry in association with the Institute of corrosion (UK)].

In order to prevent a galvanic corrosion, it is recommended to avoid small anodic area in relation to cathodic area. A galvanic connection of more noble metal such as stainless steel with large surface area via electrically conductive cargo or the water interposed in-between with a relatively small surface of a less noble metal such as, for example, carbon steel, results in more rapid corrosion.

In case the polymer coating of the tank is flawless, which practically is difficult to achieve, i.e. without pin-holes or any other defects or cracks, the galvanic current does not flow. The potential between the surfaces, that are immersed in the conducting liquid within a tank, is a difference of electrochemical potentials of stainless steel and carbon steel, accordingly. However, even insignificant damages result in occurrence of a galvanic current flow, that causes a voltage drop equal to a difference between the electrochemical potentials of the metals. Such current flow induces a galvanic pitting of the metal at the damage point of the coating.

A sufficient difference in electrochemical potentials (depending of the metal grades 0.2 to 0.6 V) between the stainless steel construction elements and the carbon steel body of the tank, provides a significant galvanic current at the damage points of the tank inside coating. The most common chemically resistant coatings are based on polymeric materials. These coatings are not electrically conductive, thus, if the coating of the tank's wall is damaged, the galvanic current flows from the stainless steel construction elements, such as stairs of the tank, heating coils, cargo pipelines, immersible cargo pump housings etc., to the damage point(-s) of the coating of the tank carbon steel body. As a result, the galvanic corrosion is induced and eventually the material of sacrificial anode - uncovered Carbon steel points on the walls of the tank - dissolves forming pitting crevices.

The difference between the electrochemical potentials is about 0.2 - 0.6 V, depending on the composition of the stainless steel and its surface state, i.e. passive or active state [A Guide to the Selection of Marine Materials. International Nickel Ltd., London. 1967]. The corrosion potential exists at the surface of the coating even though the coating and insulation properties thereof are flawless, however, in such a case the galvanic current is not flowing.

Furthermore, anti-corrosion protection of cargo tanks by anodic protection technique, i.e. by mounting zinc or aluminium electrodes with more negative electrochemical potentials than that of stainless steel, is not suitable for protection of chemical tankers or cargo tanks as it substantially limits the transportation of acid-containing cargoes. Moreover, active (impressed current) corrosion protection systems are not allowed to be arranged on chemical tanks as these are admitted to be unsafe due to possible production of hydrogen and electrolytical action thereof on the chemical cargo.

Accordingly, it is essentially to find a solution for protection of the shipping and storage tanks of marine vehicles from corrosion, in particular from electrochemical corrosion.

The present invention relates to a method of reducing a galvanic pitting of the transportation and storage tanks of the vehicles, in particular marine vehicles, that contain structural members made of stainless steel. The process comprises the following steps of: a) preparing a polymer coating (paint) by incorporation of the carbon nanoparticles into the polymer material; and (b) deposition of the prepared polymer material only on a part of an inner surface of the transportation and storage tanks of the vehicle, in particular marine vehicles. Polymer-based paints that are widely known as tanks coating materials are used as coating material. After coating the applied polymer material is cured until full polymerization thereof is obtained.

For purpose of this invention - rerouting of the Galvanic current caused by presence of the galvanic pair - stainless steel and mild carbon steel submerged in conductive media, typically sea water from pinholes to sound well conductive and same time chemically inert element. For this it is proposed to use electrically highly conductive paint, with a conductivity at least 1.0 E-04 S/cm and above, for example could be achieved by adding to the polymer paint SWCNT or amorphous carbon particles. Higher conductivity coat will protect tank surface better, but this is limited by physical and chemical and technological properties of polymer material used. By this paint shall be coated typically the bottom part of the tank and beyond, thus resulting in rerouting of the Galvanic current from pinholes (point- shape damage points of the paint) in entire of the tank to the sound chemically resistant and well conductive paint area.

Polymer material that is reinforced with nanotubes provides electrical conductivity and, according to laboratory studies, does not have a negative impact on chemical resistance of the coating material. Therefore, in order to produce electrically conductive coating and not compromising chemical resistance, it is proposed to add carbon nanotubes to the polymer material prior to application of the coating.

Carbon nanoparticles incorporated in the polymer material to provide good conductivity is selected from a group comprising single-walled carbon nanotubes (SWCNT) and multi-walled carbon nanotubes (MWCNT) in a ratio of 1% w/w or more from the polymer weight.

Anti-corrosion protection of cargo tanks by anodic protection technique, i.e. by mounting zinc or aluminium electrodes with more negative electrochemical potentials than that of stainless steel, is not suitable for protection of chemical tankers or cargo tanks as it substantially limits the transportation of acids and other chemically aggressive cargoes.

The prepared polymer material is applied only on the bottom part of the transportation and storage tanks of the vehicle, in particular marine vehicles, or the prepared highly conductive polymer material is applied on the entire inner surface of the transportation and storage tanks of the vehicle, in particular marine vehicles. Bottom part is preferable as usually it is closer to stainless steel elements - heating coils, cargo pumps and pipes etc.

Said object of the invention reduces the electrochemical corrosion of the carbon steel body of the vessel in case the tank contains elements made of stainless steel. Electrically insulating coating, applied on the elements made of stainless steel, also minimizes the ratio between exposed stainless steel surfaces and defective mild steel coating areas and could be used for reducing the flow of the galvanic current to the coating damage areas, thus reducing the galvanic current and impact accordingly.

## Claims

1. Method for reduction of galvanic pitting in a transportation and storage tank of a marine vehicle with immerged in the tank stainless steel constructive elements, wherein the method comprises the following steps:
a) preparation of polymer material by adding carbon nano-particles to the polymer material with a ratio of 1 % or more from polymer weight to a such amount that an electrical conductivity is at least 1.0 E-04 S/cm and necessary chemical and mechanical properties of the doped polymer coating are reached;
b) applying the polymer material prepared in a previous step on the inner surface of the bottom part of the transportation and storage tank of the marine vehicle; and
c) curing of the applied coating within the transportation and storage tank of the marine vehicle until full polymerization the applied coating is obtained.

2. Method according to Claim 1, **characterized in that** the method further comprises applying of an electrically non-conductive polymer material on a structural elements made of stainless steel and arranged within the transportation and storage tank of a marine vehicle.

3. Method according to any of Claim 1 to 2, **characterized in that** the carbon nano-particles added to the polymer material are electro conductive as well as chemically resistant to aggressive chemical cargos and for this are selected from the group comprising single-walled carbon nanotubes (SWCNT) and multi-walled carbon nanotubes (MWCNT).

## Patentansprüche

1. Verfahren zum Verringern von galvanischem Lochfraß in einem Transport- und Lagertank eines Seefahrzeuges, wobei in dem Tank Bauelemente aus Edelstahl eingetaucht sind, wobei das Verfahren die folgenden Schritte umfasst:
a) Herstellen von Polymermaterial durch Zugabe von Kohlenstoffnanopartikeln zu dem Polymermaterial in einem Verhältnis von 1 % oder mehr des Polymergewichts zu einer solchen Menge, dass eine elektrische Leitfähigkeit zumindest 1,0 E-04 S/cm beträgt und erforderliche chemische und mechanische Eigenschaften der dotierten Polymerbeschichtung erreicht werden;
b) Auftragen des in einem vorherigen Schritt hergestellten Polymermaterials auf die Innenfläche des Bodenteils des Transport- und Lagertanks des Seefahrzeuges; und
c) Härten der aufgetragenen Beschichtung innerhalb des Transport- und Lagertanks des Seefahrzeuges, bis eine vollständige Polymerisierung der aufgetragenen Beschichtung erhalten ist.

2. Verfahren nach Anspruch 1, **dadurch gekennzeichnet, dass** das Verfahren ferner das Auftragen eines elektrisch nichtleitenden Polymermaterials auf ein Bauelement aus Edelstahl, das innerhalb des Transport- und Lagertanks eines Seefahrzeugs angeordnet ist, umfasst.

3. Verfahren nach einem der Ansprüche 1 bis 2, **dadurch gekennzeichnet, dass** die zu dem Polymermaterial zugegebenen Kohlenstoffnanopartikel elektrisch leitfähig und gegenüber aggressiven chemischen Ladungen chemisch resistent sind und daher aus der Gruppe ausgewählt sind, die einwandige Kohlenstoffnanoröhrchen (SWCNT) und mehrwandige Kohlenstoffnanoröhren (MWCNT) umfasst.

## Revendications

1. Procédé permettant de réduire la corrosion par piqûres dans un réservoir de transport et de stockage d'un véhicule marin muni d'éléments de construction en acier inoxydable, immergés dans le réservoir, le procédé comprenant les étapes suivantes consistant à :
a) préparer un matériau polymère en ajoutant des nanoparticules de carbone au matériau polymère avec un rapport de 1 % ou plus du poids de polymère jusqu'à une quantité telle qu'une conductivité électrique soit au moins de 1,0 E-04 S/cm et des propriétés chimiques et mécaniques nécessaires du revêtement polymère dopé soient atteintes ;
b) appliquer le matériau polymère préparé à l'étape précédente sur la surface intérieure de la partie inférieure du réservoir de transport et de stockage du véhicule marin ; and
c) durcir le revêtement appliqué à l'intérieur du réservoir de transport et de stockage du véhicule marin jusqu'à ce que la polymérisation complète du revêtement appliqué soit obtenue.

2. Procédé selon la revendication 1, **caractérisé en ce que** le procédé comprend en outre l'application d'un matériau polymère électriquement non conducteur sur des éléments structurels en acier inoxydable et agencés à l'intérieur du réservoir de transport et de stockage d'un véhicule marin.

3. Procédé selon l'une quelconque des revendications 1 à 2, **caractérisé en ce que** les nanoparticules de carbone ajoutées au matériau polymère sont électriquement conductrices ainsi que chimiquement résistantes aux cargaisons de produits chimiques agressifs et sont à cet effet sélectionnées dans le groupe comprenant des nanotubes de carbone à paroi simple (SWCNT) et des nanotubes de carbone à parois multiples (MWCNT).
